# EUROPÄISCHE PATENTSCHRIFT

(11) **EP 3 616 018 B1**
(45) Veröffentlichungstag und Bekanntmachung des Hinweises auf die Patenterteilung: **18.10.2023**
(21) Anmeldenummer: 18720263.5
(22) Anmeldetag: 27.04.2018
(51) Int. Cl.: G05D 1/02

(54) **NAVIGATIONSSYSTEM FÜR UNTERWASSERFAHRZEUGE**
NAVIGATION SYSTEM FOR UNDERWATER VEHICLES
SYSTÈME DE NAVIGATION POUR DES VÉHICULES SOUS-MARINS

(30) Priorität: 28.04.2017 DE 102017207231
(43) Veröffentlichungstag der Anmeldung: 04.03.2020
(73) Patentinhaber: Fraunhofer-Gesellschaft zur Förderung der angewandten Forschung e.V., 80686 München (DE)
(72) Erfinder: BRINK, Gunnar, 76227 Karlsruhe (DE); DEVASSYKUTTY, Edwin, 76137 Karlsruhe (DE); LANGEN, Christian, 76137 Karlsruhe (DE)
(74) Vertreter: Stöckeler, Ferdinand
(86) Internationale Anmeldenummer: PCT/EP2018/060959
(87) Internationale Veröffentlichungsnummer: WO 2018/197704

(56) Entgegenhaltungen:
- CN-B- 102 843 174
- FR-A1- 2 982 375
- US-A1- 2016 272 291
- WEISHENG YAN ET AL: "Optimal Distance between Mobile Buoy and Target for Moving Long Baseline Positioning System", JOURNAL OF NAVIGATION., Bd. 68, Nr. 04, 23. Februar 2015 (2015-02-23), Seiten 809-826, XP055495322, GB ISSN: 0373-4633, DOI: 10.1017/S0373463315000077

## Beschreibung

Ausführungsbeispiele der vorliegenden Erfindung beziehen sich auf ein Navigationssystem für (autonome) Unterwasserfahrzeuge, auf einen Oberflächensender des Navigationssystems und ein entsprechendes Navigationsverfahren. Bevorzugte Ausführungsbeispiele beziehen sich auf eine Bergevorrichtung inkludierend einen Oberflächensender.

Tiefseefahrzeuge und autonome Unterwasserfahrzeuge (AUVs, autonomous underwater vehicles) im Speziellen haben begrenzte Treibstoff- bzw. Batterievorräte. Jedes autonom fahrende Fahrzeug, egal ob Flugdrohne, Fahrzeug, Boot oder Tauchroboter braucht zur Navigation in der Regel drei Datenquellen:
Erstens gibt es in der Regel ein Fahrzeugmodell, das vorhersagt, wie die Aktionen von Antrieb und Steuerung/Rudern sich auf die Bewegungsrichtung und Bewegungsgeschwindigkeit auswirkt.

Zweitens gibt es in der Regel eine Inertial-Messeinheit (inertial measurement unit, IMU) mit Beschleunigungsmessern und einem Kompass (Magnet-, Kreiselkompass, optischem Kreisel oder Foucault'schem Pendel). Diese IMU misst die Beschleunigung und die Bewegungsrichtung.

Da die IMU hohe Drift aufweist, muss man in der Regel mindestens alle 10 Sekunden durch andere Verfahren zur Positionsbestimmung stützen. Im Freien kann man dazu satellitengestützte Navigation wie GPS, GLONASS oder Galileo (allgemein GNSS) verwenden.

Man verwendet Kalman-Filter oder Baye'sche Inferenz oder andere Verfahren, um die verschiedenen Daten zu fusionieren und zur Steuerung zu verwenden.

Unterwasser gibt es keine Möglichkeit zur satellitengestützten Navigation bzw. satellitengestützten Geo-Referenzierung, da die Funksignale der Satelliten nicht im bzw. unter Wasser funktionieren. Die Tiefe (z-Richtung) kann man leicht über Barometrie bestimmen (in etwa 0,1 Bar pro Meter Wassertiefe). Schwierig ist die Bestimmung von Position und Bewegung in x- und y-Richtung, d. h. also parallel zur Wasseroberfläche.

Zum Stand der Technik: Die US 2016/0272291 zeigt, dass ein Oberflächenfahrzeug einem Unterwasserfahrzeug folgt, um in der Nähe zu bleiben. Die FR 2982375 A1 beschreibt eine Art und Weise zu navigieren. Das Dokument mit dem Titel "Optimal Distance Between Mobile Boil and Target for Moving Long Baseline Position Systems" beschreibt das Abschätzen einer Position.

Sobald die Tiefseefahrzeuge den Grund erkennen können, kann man Doppler-Velocity Log oder Simultaneous Localization and Mapping verwenden, um die Position zu bestimmen. Das ist aber mindestens während der Tauchfahrt, die mehrere Stunden dauern kann, nicht möglich.

Im Stand der Technik gibt es zahlreiche Ansätze, wie die Unterwassernavigation dennoch bewerkstelligt werden kann. Nachfolgend werden drei dieser Ansätze beschrieben.

Ein Weg ist das Long-Baseline-Verfahren. Dazu setzt man mehrere Baken im Vermessungsgebiet auf dem Meeresboden ab, beispielsweise in einem Abstand von jeweils bis zu 4km voneinander. In der einfachen Variante senden diese Sonarsignale, z. B. als Pings. Mit einem oder mehreren Oberflächenboot/en, das seine Position mit satellitengestützter Navigation gut bestimmen kann, und das über einen Sonarempfänger verfügt, misst man die Position der Baken aus, zum Beispiel über Time-of-Flight (Laufzeit) der Ping-Signale.

Während der eigentlichen Fahrt der Unterwasserfahrzeuge können die ihre Position dann gegenüber den Baken durch Messung der Sonarsignale etwa über Time-of-Flight (Laufzeit) bestimmen und so das Fehlen von satellitengestützter Navigation kompensieren. Ausgehend von der bestimmten Laufzeit kann dann das Gefährt unter Wasser oder auf Basis der Signale, die das Gefährt unter Wasser empfangen hat, der Abstand zwischen den einzelnen Sendern (Baken) und dem Unterwasserfahrzeug bestimmt werden, so dass mittels Triangulation eine Positionsbestimmung des Unterwasserfahrzeuges möglich ist. Diese Positionsbestimmung über die Triangulation ermöglicht in erster Linie das Erhalten eines relativen Abstandes zu den einzelnen Baken, wobei die absolute Position dadurch bestimmbar ist, dass im Vorfeld die Positionen der Baken vermessen wurden und somit bekannt sind.

Nach der Mission reduziert jede Bake ihr spezifisches Gewicht, zum Beispiel durch Abwurf eines Abwurfgewichts und steigt zur Meeresoberfläche auf, wo sie eingesammelt werden kann.

Dieses Verfahren kann so präzise sein, dass man Positionsbestimmungen deutlich besser als einen Meter genau erreichen kann. Der Nachteil ist, dass das Absetzen und Einsammeln der Baken aufwändig ist. Auch das Einmessen der Baken dauert Zeit. Oft benötigt man pro Messung für das Einmessen der Baken einen ganzen Tag als Arbeitszeit vor der eigentlichen Tauchmission.

Ein anderes Verfahren, bei dem man keine Baken ausbringen, einmessen und einsammeln muss, ist das Ultra-Short-Baseline-Verfahren. Hier senden die Tauchfahrzeuge akustische Signale, z.B. Pings. Ein Oberflächenfahrzeug hat einen Sensor, der aus mindestens zwei akustischen Empfängern im Abstand von wenigen Zentimetern besteht. Diese Empfänger bestimmen die Phasenverschiebung der akustischen Wellen und so den Winkel, in dem sich die Tauchfahrzeuge in Bezug auf die Oberflächenfahrzeuge, die über satellitengestützte Navigation eingemessen sind, vermessen. Man kann Winkelauflösung von bis zu 0,05° erreichen, in der Praxis erreicht man wegen Umgebungsgeräuschen, Wellenbewegung und anderen Effekten aktuell meist eine Auflösung von bis zu 0,2°. Multipliziert man den Sinus von 0,2° mit mehreren Tausend Meter Meerestiefe, kommt man auf Ungenauigkeiten von mehreren Metern. Der ermittelte Ort des Tauchfahrzeugs wird über ein zusätzliches akustisches Modem oder über das USBL-Modem selbst vom Oberflächenfahrzeug an das Tauchfahrzeug übermittelt. Im Wasser liegt die Schallgeschwindigkeit bei etwa 1,5km/Sekunde. Trotz der hohen Schallgeschwindigkeit ergeben sich unter Wasser, insbesondere in der Tiefsee, Latenzzeiten von mehreren Sekunden.

Eine weitere Variante, die zum Einsatz kommt, ist das so genannte GIB-Konzept (GPS Intelligent Buoys). GIB-Systeme sind umgedrehte Long-Baseline-Anwendungen mit akustischem Positionierungsgerät, bei denen die akustischen Empfänger auf mit Satellitennavigation ausgestatten Bojen installiert sind. Diese treiben entweder im Wasser oder sind dort verankert und mit einer Time-of-Flight-Technik lokalisiert. Häufig werden mehrere GIBs über einem Messgebiet eingesetzt, wobei Genauigkeiten von einigen Zentimetern bis zu einem Meter in Echtzeit möglich sind.

Dadurch, dass die Position in erster Linie auf Empfängerseite, d. h. an der Oberfläche bestimmt wird, kann dieses System für AUVs nur dann sinnvoll benutzt werden, wenn die Position an das AUVs übermittelt wird. Hierdurch entsteht eine Latenzzeit. Auch wenn die eingesetzten Bojen nicht aufwändig unter Wasser verankert werden müssen und deren Position sich im Betrieb selber bestimmt, ist es dennoch notwendig, die Bojen nach dem Einsatz wieder einzusammeln.

Zusammenfassend ist also festzustellen, dass praktisch alle auf dem Markt verfügbaren Systeme Nachteile in Bezug auf den Aufwand beim Einsatz, die Genauigkeit und/oder die entstehende Latenz haben. Deshalb besteht der Bedarf nach verbessertem Ansatz. Aufgabe der vorliegenden Erfindung ist es ein Navigationssystem für Unterwasserfahrzeuge zu schaffen, das die oben erläuterten Nachteile vermeidet.

Diese Aufgabe wird durch den Gegenstand der unabhängigen Ansprüche gelöst. Ausführungsbeispiele der vorliegenden Erfindung schaffen ein Navigationssystem, das einerseits auf Seiten des Unterwasserfahrzeugs / AUVs angeordnet ist, und andererseits als Gegenstück einen Oberflächensender umfasst. Die beiden Einheiten kommunizieren so miteinander, dass der Oberflächensender sein Signal gerichtet zu der Position des Unterwasserfahrzeugs aussendet und dass der Oberflächensender dem Unterwasserfahrzeug folgt, um so die Positionsbestimmungsfähigkeit zu verbessern. Bezüglich weiterer Merkmale wird auf die unabhängigen Patentansprüche verwiesen. Entsprechend einem Aspekt handelt es sich bei den Oberflächensendern um derartige, die auch Steuermittel, wie zum Beispiel eine Antriebseinheit und eine Rudereinheit, sowie einen Steuerungsrechner umfassen. Dieser Steuerungsrechner bekommt von einer Positionsberechnungseinheit auf AUV-Seite eine Information über die aktuelle Position des AUVs, um ausgehend hiervon die Steuermittel (Motor, Ruderanlage) so anzusteuern, dass der Oberflächensender aktiv in y- und x-Richtung auf der Wasseroberfläche dem Unterwasserfahrzeug folgt; der Oberflächensender wird aktiv immer oberhalb, z. B. fast senkrecht oberhalb zu dem Unterwasserfahrzeug, positioniert Dies hat den Vorteil, dass, auch wenn die Oberflächenströmungen anders sind als die Strömungen unter Wasser bzw. die gewünschte Bewegungsrichtung des AUVs, dass der Sender immer korrekt (z.B. senkrecht oder in einem vorbestimmten Winkel) in Bezug auf das AUVs angeordnet ist und das AUVs nicht aus der Reichweite desselben kommen kann.

Zusätzlich kann entsprechend einem weiteren Aspekt der Oberflächensender (oberhalb des AUVs) seine Schallkeule (erstes Signal) aktiv zu dem AUVs richten, wobei diese Richtwirkung beispielsweise durch ein einstellbares Array, einen beweglichen Senden oder ein (nach unten gerichtetes, schwenkbares) Horn möglich ist. Hierbei wird die Positionsinformation, welche vom AUV erhalten wird, zum Ausrichten der Schallsignalkeule genutzt. Hierdurch ergibt sich eine effiziente Signalabstrahl-Charakteristik.

Beiden Aspekten liegt die Erkenntnis zugrunde, dass die Unterwassernavigation dadurch verbessert werden kann, dass der/die Sender in simpler Art und Weise (ohne Verankerung) auf der Wasseroberfläche positioniert sind, wenn sie real oder mittels Signalrichtung dem Unterwasserfahrzeug folgen. Hierzu erhalten sie eine entsprechende Positionsinformation, z.B. relative Position gegenüber dem Oberflächensender, vom Unterwasserfahrzeug, ausgehend von welcher der Sender ausgerichtet oder verfahren wird. Die richtige Positionierung des Senders, insbesondere senkrechte Positionierung, sowie die gerichteten Abstrahlung hat den Vorteil, dass so Effekte, wie so genannte Multi-Path-Signale aufgrund von Reflexionen oder Refraktionen an der Wasserschicht minimiert werden. Des Weiteren ergibt sich noch ein zusätzlicher Vorteil, nämlich dass die Signalenergie kleiner ausfallen kann, da die Abstände auch minimal sind.

Entsprechend einem weiteren Aspekt wird ein Empfänger des Unterwasserfahrzeugs geschaffen. Dieser umfasst die eigentliche Empfängereinheit, z. B. für akustische Signale oder Sonarsignale sowie einen Laufzeitberechner. Der Empfänger umfasst zusätzlich eine entweder intern oder extern angeordnete Positionsberechnungseinheit. Der Empfänger ist ausgebildet, um zumindest ein erstes Signal von einem ersten Oberflächensender (z. B. eine Boje mit GPS) zu empfangen. Das erste Signal ist derart gestaltet, dass eine Auswertung desselben hinsichtlich seiner Laufzeit möglich ist, um hierbei die entsprechenden Abstände zu dem Oberflächensender zu bestimmen. Die Positionsberechnungseinheit ist ausgebildet ausgehend von einer bekannten Information über die Positionen der Oberflächensender und ausgehend von dem bestimmen Abstand, die Positionen des autonomen Unterwasserfahrzeuges im dreidimensionalen Unterwasserraum (x-y-und z-Richtung) zu bestimmen. Der Empfänger weist noch einen Sender auf, der ausgebildet ist, um zu dem Oberflächensender ein Steuerungssignal, z.B. in Form einer Positionsinformation zuzusenden, so dass der Oberflächensender in x- und y-Richtung der x- und y-Richtung des Unterwasserfahrzeugs folgen kann oder sodass der ersten Oberflächensender das zu sendende Signal gerichtet in Richtung der Position des Unterwasserfahrzeugs sendet.

Die durch die Empfängereinheit bzw. die Positionsberechnungseinheit ermittelte Positionsinformation wird entsprechend Ausführungsbeispielen, z. B. über Funk bzw. ein akustisches Modem dem Oberflächensender zur Verfügung gestellt.

Bei der Positionsberechnung kann entsprechend Ausführungsbeispielen auch ein zweites Signal von einem zweiten Oberflächensender (zur Ermittlung eines zweiten Abstands) oder eine Zusatzinformation, wie z.B. eine (barometrisch ermittelte) Tiefeninformation oder eine Information über den aktuellen Abstrahlwinkel des Oberflächensenders, hinzugezogen werden.

Ausführungsbeispielen dieses Aspekt liegt die Erkenntnis zugrunde, dass das oben erläuterte Oberflächenfahrzeug, welches einen der wesentlichen Teile des vorliegend erläuterten Gesamtsystems bildet, bzw. dass Navigationssystem als solches eine Positionsinformation bzgl. der Position des Unterwasserfahrzeugs benötigt, um die Gesamtfunktionalität sicherzustellen.AUV Dieser Ansatz ermöglicht gleichzeitig das Vermeiden von aufwendigen Installations- und Kalibrierungsprozessen sowie eine hohe Genauigkeit der Positionsbestimmung. In anderen Worten heißt das, dass bei dem vorgestellten Konzept eine Art Long-Baseline-Verfahren (inklusive der Vorteile der hohen Präzision) eingesetzt wird, wobei die Sender nicht zwingend an einer Position fixiert werden müssen, da diese ihre Position selber bestimmen und dem eigentlichen Positionsrechner zur Verfügung stellen. Wenn die Positionsberechnungseinheit direkt auf dem AUVs angeordnet ist, kann weiter auch Latenz vermieden werden.

Wie bereits oben angedeutet, umfasst entsprechend Ausführungsbeispielen jeder Oberflächensender eine GNSS-Einheit, wie zum Beispiel einen GPS-Empfänger, um autonom seine Position zu bestimmen. Diese Positionsinformation kann entsprechend weiterem Ausführungsbeispiel über das ausgesendete Schallsignal oder ein paralleles Signal mit übertragen werden, so dass im Endeffekt die Positionsberechnungseinheit die Positionsinformation erhält. An dieser Stelle sei angemerkt, dass die Signale der Oberflächensender (vgl. erstes und zweites Signal) im Regelfall Schallsignale sind, da diese sich unter Wasser gut ausbreiten. Es kann sich beispielsweise um einen Ping handeln, wobei dieser dann in bevorzugter Weise so ausgeführt ist, dass eine Synchronisierung möglich ist. Eine Synchronisierung kann dadurch erreicht werden, dass dem Ping ein Zeitstempel hinzugefügt wird, oder dass die Oberflächensender sowie der Empfänger des AUVs mittels hochgenauen Zeitmessern synchronisiert sind, wobei dann der Ping in entsprechend regelmäßigen Abständen ausgesendet wird. Alternative zu einem Ping kann auch ein so genanntes Zeit-Verzögerungs-Spektrometrie-Signal (Time Delay Spectrometry signal), z. B. nach Richard Heyser genutzt werden. Hierbei handelt es sich um ein Signal, bei welchem die Frequenz während des Aussendens entsprechend variiert wird, um aufgrund der Frequenzverschiebung die Laufzeit zu bestimmen.

Entsprechend bevorzugten Ausführungsbeispielen ist der oben erläuterte Oberflächensender nicht nur ein Oberflächensender, sondern in eine so genannte Bergevorrichtung für ein AUVs integriert. Bei erfindungsgemäßen Anwendungen werden AUVs über eigene, schwimmende Bergevorrichtungen ins Wasser gesetzt und geborgen, so dass jedem AUVs eine ferngesteuert oder autonom agierende Bergevorrichtung zugeordnet ist. Diese Bergevorrichtung kann beispielsweise eine Schlauchbootform oder eine Hullform aufweisen, so dass zwischen den zwei Rümpfen der Hullform das autonome Unterwasserfahrzeug aufgenommen und mittels Befestigungsmitteln (Seilsystem oder Kran) befestigt /geborgen werden kann. Da die Bergevorrichtung den Oberflächensender inkludiert hat, ist es nicht mehr notwendig zusätzliche Bojen für die Navigation auszusetzen. Entsprechend einer bevorzugten Variante, wird die Bergevorrichtung entweder im Kurzstreckenbetrieb, d. h. in kleinem Abstand, z. B. 10 oder 20 km um das Mutterschiff oder im Langstreckenbetrieb, z. B. von der Küste aus, in mehreren 100 Kilometer Entfernung eingesetzt. Insbesondere die zweite Variante ist besonders im Hinblick auf die Einsatzkosten vorteilhaft, da die Mission von Land aus gestartet werden kann, ohne dass Kosten für ein Mutterschiff entstehen und die AUVs bzw. Bergevorrichtungen der AUVs das entsprechende Navigationssystem mitführen.

Häufig kommen mindestens zwei Oberflächensender oder bevorzugt sogar drei oder vier Oberflächensender, die mit einem Abstand von z. B. 100 Metern entfernt voneinander auf der Wasseroberfläche schwimmen, zum Einsatz. Dies ist aber für den praktischen Betrieb keine wirkliche Restriktion, da im Regelfall sowieso mehrere AUVs und damit auch mehrere Bergevorrichtung parallel genutzt werden. Insofern kann ein AUVs das erste Signal von seiner eigenen Bergevorrichtung empfangen, während es das zweite Signal von einer zweiten Bergevorrichtung erhält. Der Hintergrund hierzu ist, dass mehrere Fahrzeuge die Positionsbestimmung verbessern.

Ein Ausführungsbeispiel schafft ein Navigationssytem mit einer auf AUV-Seite angeordnete Empfängereinheit und sowie zumindest einem Oberflächensender.

Weiterbildungen sind in den Unteransprüchen definiert. Ausführungsbeispiele der vorliegenden Erfindung werden anhand der beiliegenden Zeichnungen erläutert. Es zeigen:
- Fig. 1: eine schematische Darstellung eines Navigationssystems umfassend zwei Oberflächensender und ein AUVs gemäß einem Ausführungsbeispiel;
- Fig. 2a - b: schematische Darstellungen von unterschiedlichen Varianten der auf AUVs-Seite angeordneten Empfängereinheit gemäß Ausführungsbeispielen;
- Fig. 3a - d: schematische Darstellungen des Oberflächensenders gemäß weiteren Ausführungsbeispielen; und
- Fig. 4: eine schematische Darstellung von zwei Bergevorrichtungen für AUVs mit integriertem Oberflächensender gemäß einem Ausführungsbeispiel.

Bevor nachfolgend Ausführungsbeispiele der vorliegenden Erfindung anhand der Figuren im Detail erläutert werden, sei darauf hingewiesen, dass gleiche oder gleichwirkende Elemente mit gleichen Bezugszeichen versehen sind, so dass die Beschreibung derer aufeinander anwendbar bzw. austauschbar ist.

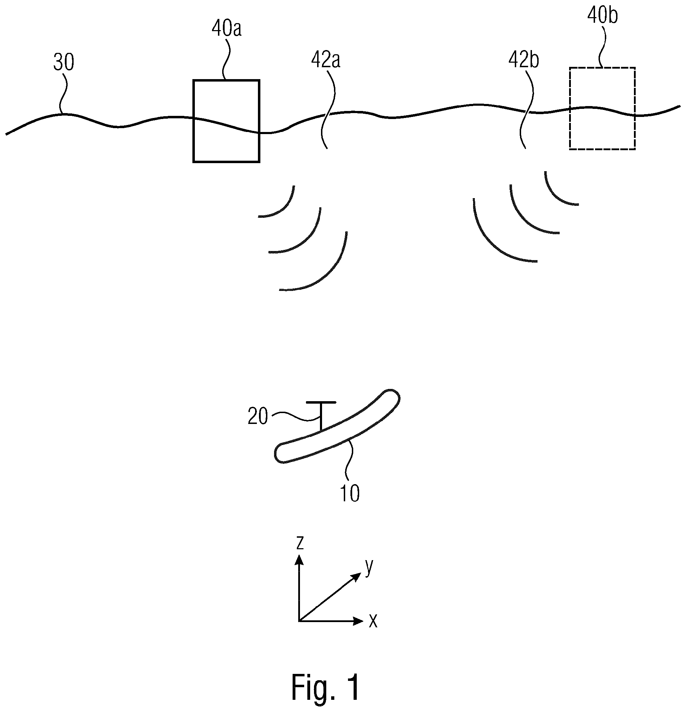

Fig. 1 zeigt ein AUVs 10 mit einem Navigationsempfänger 20. Das AUVs befindet sich im dreidimensionalen Unterwasser (vgl. x, y, z) unter der Wasseroberfläche 30, auf welcher z.B. die zwei Oberflächensender 40a und 40b schwimmen, wobei der zweite Sender 40b optional ist.

Jeder der Sender 40a und 40b sendet ein zugehöriges Signal (z. B. ein akustisches Signal oder Sonarsignal) 42a und 42b gerichtet in Richtung zu der (bekannten) Position des Empfängers 20 aus, der dann die Laufzeit des Signals 42a und 42b ermittelt und ausgehend davon den jeweiligen Abstand zwischen dem AUVs 10 und dem Sender 40a bzw. 40b ermittelt. Auf Basis der ein oder mehreren Abstände kann mittels Triangulation die Position des AUVs 10 im Wasser relativ zu den Oberflächensendern 40a und 40b ermittelt werden. Alternativ zu dem Ansatz mit zwei Signalen 42a/42b aus unterschiedlichen Richtungen wäre auch das Verwenden eines Signals 42a in Kombination mit einer Zusatzinformation, wie z.B. eine (barometrisch ermittelte) Tiefeninformation oder eine Information über den aktuellen Abstrahlwinkel des Oberflächensenders, möglich. Bei Kenntnis der Positionen der Oberflächensender 40a und 40b ist dann auch die absolute Position des AUVs 10 bestimmbar.

In Art einer Feedbackschleife sendet das Unterwasserfahrzeug 10 die ermittelte absolute oder relative Position zurück zu dem Oberflächensender 40a oder Oberflächensender 40b, der dann über ein Abstrahl-Array oder einen anderen ausrichtbaren Sender die nachfolgenden Signale 42a bzw. 42b zu dem AUV 10 emittiert. Hierbei wäre es auch möglich, dass statt oder zusätzlich zu der Signal-Richtung der Oberflächensender 40a (oder40b) dem AUV 10 folgt.

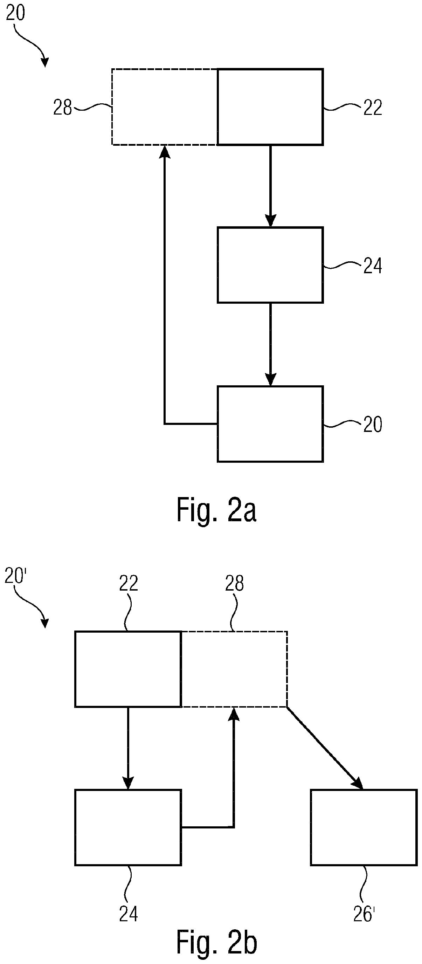

Dieser die auf Empfängerseite involvierten Komponenten werden nachfolgend Bezug nehmend auf Fig. 2a bzw. 2b erläutert.

Fig. 2a zeigt die wesentlichen on-board Komponenten des Navigationssystemempfängers 20, umfassend die Einheiten Empfänger 22, Berechnungseinheit 24 für die Laufzeit und Positionsberechnungseinheit 26. Die Einheit 22 empfängt zumindest die Signale 42a (und 42b). Die mittels der Einheit 22 empfangenen Signale werden dann in der Einheit 24 in Bezug auf ihre Laufzeit ausgewertet. Zur Laufzeitauswertung ist eine Synchronität vorteilhaft.

Hierzu kann beispielsweise die Einheit 24 mit den Sendern 40a (und 40b) synchronisiert sein, indem beispielsweise alle Einheiten auf eine hochexakte Uhr, z. B. eine mikrosystemtechnisch hergestellte Rubidium- oder Cäsium-Atomuhr aufweisen. So wird eine Synchronisierung der bei dem Tauchfahrzeug auftreffenden Signale mit den von den Oberflächenfahrzeugen 40a und 40b zu definierten Zeitpunkten / regelmäßig abgesendeten Signalen 42a und 42b erreicht. Wichtig ist, dass man auch nach mehrstündiger Mission noch eine Synchronität im Mikrosekundenbereich sicherstellen kann, da nur so die Laufzeit und damit dann der Abstand bestimmt werden kann. Alternativ oder additiv zu den zum definierten Zeitpunkt abgesendeten Signalen 42a und 42b können auch Signale mit einem Zeitstempel von den Oberflächenfahrzeugen 40a und 40b ausgesendet werden, so dass eine Synchronisation im Betrieb möglich ist.

Diese Abstandsbestimmung erfolgt in der Einheit 24 für die Signale 42a (und 42b) separat. Dieses Konzept ist auch unter dem Stichwort Time-of-Flight-Messung bekannt. Entsprechend Ausführungsbeispielen können auch zusätzliche Informationen, wie zum Beispiel die barometrisch ermittelte Tiefe hinzugefügt werden. Des Weiteren ist es genauso denkbar, dass statt der zwei Signale 42a und 42b auch noch ein drittes Signal bzw. ein dritter Abstand ausgewertet wird.

Der Laufzeitberechner 24 gibt als Ergebnis ein oder mehrere Abstände an den Positionsberechner 26 aus, der dann in erster Linie die Relativposition des AUVs 10 ermittelt bzw. unter Kenntnis der Positionen der Oberflächensender 40a und 40b auch die absolute Position.

Alternativ wäre die Ermittlung der relativen bzw. absoluten Unterwasserposition wie folgt möglich: Der Empfänger 20 erhält über die Empfangseinheit 22 das Signal 42a und wertet diese mittels den Einheiten 24 und 26 hinsichtlich dem Abstand zu dem Oberflächenfahrzeug aus. Durch Kenntnis des von dem Oberflächensender 40a angewendeten Winkels (Zusatzinformation) kann ausgehend von der Position des Oberflächensenders 40a die Position des AUVs 10 bestimmt werden. Die Bestimmung ist umso genauer, je mehr Informationen verwendet werden (ein oder mehrere Sender 42a/42b/.., barometrische Tiefe, usw.) und/oder je gerichteter (z.B. enge Schallkeule mit Öffnungswinkel > 20° oder 10°) das Signal 42a ausgesendet werden kann, so dass selbiges vom Empfänger 22 empfangen wird. Deshalb ist ein stetiger Abgleich zwischen ermittelter Unterwasserposition und Abstrahlrichtung (vgl. Einheit 40a) vorteilhaft.

Entsprechend einem weiteren Ausführungsbeispiel kann die Einheit 20 deshalb eine Schnittstelle 28 haben, die einerseits die Position, die mittels dem Positionsrechner 26 berechnet ist, nach externen, z. B. zu den Einheiten 40a und 40b übermittelt und/oder andererseits die Positionsinformationen der Oberflächensender 40a und 40b empfängt. Da bevorzugterweise unter Wasser mit Akustikmodems gearbeitet wird, kann die Schnittstelle 28 zu dem Empfänger 22 gehören.

Bezüglich der Signale 42a und 42b sei angemerkt, dass diese beispielsweise Ping-Signale sein können. Idealerweise verwendet man Frequenzen unter 25 kHz, da bei höheren Frequenzen die Schallabsorption im Meerwasser wegen Salzen, vor allem Magnesiumsalzen und dem Wasser selbst sehr hoch wird und schnell mehrere 100 dB/km erreichen kann.

Auch wenn bei obigen Ausführungsbeispielen immer von einem Ping-Signal ausgegangen wurde, kann das Signal auch eine andere Form aufweisen. Diese Signale können bevorzugt entsprechend der Time Delay Spectrometry nach Richard Heyser verschickt und ausgewertet werden. Demnach verändert man während der Sendung die Frequenz des Signals auf definierte Weise. Bei zeitlicher Synchronisation der Sender und Empfänger kann über die Frequenzverschiebung der empfangenen Signale deren Laufzeit präzise bestimmt werden.

Falls das Signal einen Multipath-Weg nimmt, zum Beispiel wegen Schichtungen im Wasser mit unterschiedlicher Schallgeschwindigkeit, wertet man jeweils das Signal mit der höchsten Frequenz aus (das am schnellsten war). Man kann im Tauchfahrzeug leicht bestimmen, wie hoch die Frequenzverschiebung zu einem gegebenen Zeitpunkt ist und Multipath-Reflexionen durch ein selektives Filter gezielt ausblenden.

Fig. 2b zeigt eine weitere Variante der on-board-Komponenten des Navigationssystem 20'. Die on-board-Komponenten 20' umfassen die Empfängereinheit 22 sowie den Laufzeitberechner 24. Der Positionsberechner 26' kann also extern, z. B. auf einem Oberflächensender, dem Mutterschiff oder dem Festland angeordnet sein und erhält über eine Funkverbindung (vgl. Komponente 28) von dem Laufzeitberechner 24 die berechneten Abstände bzw. Informationen diesbezüglich). Bezüglich dieses Ausführungsbeispiels 20' sei angemerkt, dass zwar weiterhin Nachteile bezüglich der Latenzzeit besteht, dennoch aber die Vorteile bezüglich der hohen Präzision der Ortung und der einfachen Installation vorliegen.

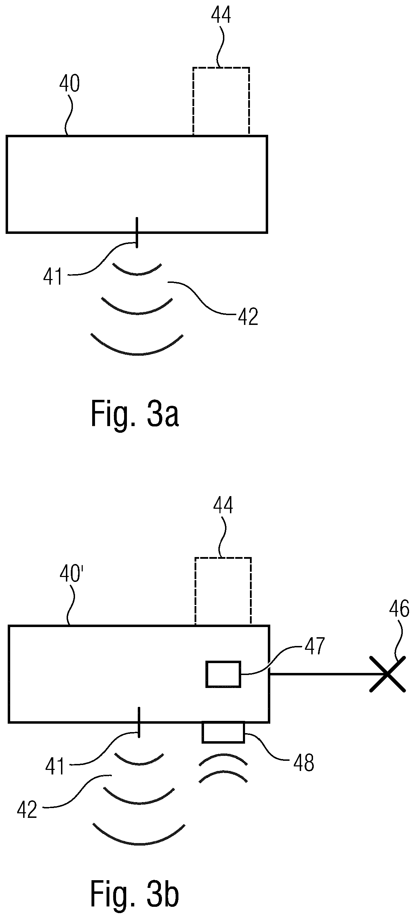

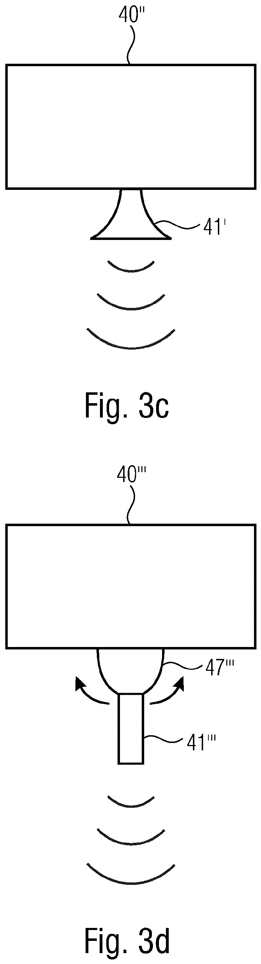

Bezug nehmen auf Fig. 3 werden nun einige Varianten des Oberflächensenders 40 erläutert.

Fig. 3a zeigt einen Oberflächensender 40 mit dem eigentlichen Unterwassersender 41 (z. B. einen akustischen Treiber eines Unterwasser- bzw. Akustikmodems), der das Signal 42 gerichtet aussendet. Weiter umfasst der Oberflächensender 40 auch noch eine GNSS-Einheit 44, wie z. B. einen GPS-Empfänger, der die Position des Oberflächensenders 40 bestimmt. Diese Positionsinformation wird im intern oder extern angeordneten Positionsberechner (vgl. Bezugszeichen 26 bzw. 26' aus Fig. 2a und 2b) zur Verfügung gestellt. Die Information bezüglich der absoluten Position des Oberflächensenders 40 kann beispielsweise dem Signal 42 aufmoduliert werden bzw. allgemein von diesem mit enthalten sein.

Dieser einfachste Oberflächensender ist gegebenenfalls nicht bei allen Wetterbedingungen optimal, da er sich unter Umständen aufgrund von Strömungen von dem AUVs 10 (vgl. Fig. 1) entfernt. Deshalb kann entsprechend weiterem Ausführungsbeispiel der Oberflächensender auch aktiv gesteuert sein, wie in Fig. 2b dargestellt ist.

Fig. 3b zeigt einen Oberflächensender 40' mit zumindest dem eigentlichen Unterwassersendekopf 41, einer optionalen GSS-Einheit 44 sowie Steuerungsmittel 46, z. B. in Form einer Schiffsschraube in Kombination mit einem Ruder oder einem Pod-Antrieb. Diese Steuerungsmittel 46 werden über einen Steuerungsrechner 47 gesteuert. Die Steuerung erfolgt im bevorzugten Ausführungsbeispiel autonom und zwar so, dass der Oberflächensender 40' sich in der Nähe des AUVs 10 (vgl. Fig. 1) aufhält bzw., um genau zu sein, so dass der Oberflächensender 40' dem AUVs 10 in Bezug auf die x- und y-Bewegung desselben folgt. Hierzu kann der Oberflächensender 40' einen Empfänger, wie zum Beispiel einem Unterwasserempfänger (z. B. Teil des sowieso vorhandenen Akustikmodems) umfassen, über welchen er die Positionsinformation vom AUVs bzw. vom Positionsrechner 26/26' erhält. Die Tauchfahrzeuge übermitteln ihre Position und ihre aktuelle Bewegung an die Oberflächenfahrzeuge, z. B. über ein akustisches Modem. Die Latenzzeit der Positionsbestimmung ist so beim Tauchfahrzeug nur halb so groß wie beim Oberflächenfahrzeug. Dieser Empfänger ist mit dem Bezugszeichen 48 versehen.

Der Oberflächensender 40' wird aktiv über das Messgebiet bewegt und ist folglich nicht verankert oder treibt nicht passiv. Das heißt also, dass der Oberflächensender 40' während der Mission das Unterwasserfahrzeug 10 begleitet und über diesen fährt. Die Oberflächenfahrzeuge 40' fahren soweit wie möglich senkrecht über dem Tauchfahrzeug, um Multipath-Signale durch Reflexion oder Refraktion an Wasserschichten zu minimieren.

Ein weiterer Vorteil stellt sich dadurch ein, nämlich dass die Signale 42 senkrecht nach unten imitiert werden können, was die Signalenergie bzw. allgemeine Verluste des Signals minimiert. Entsprechend Ausführungsbeispielen kann entweder ein Phased-Array-Sender als Sender 41 verwendet werden, oder auch ein geeignetes Horn, wie beispielsweise in Fig. 3c dargestellt ist.

Fig. 3c zeigt einen Oberflächensender 40" mit einem unter Wasser angeordneten Hornsender 41'.

Fig. 3d zeigt einen Oberflächensender 40‴, der mit dem Oberflächensender 40 vergleichbar ist, aber ausgebildet ist, den eigentlichen Unterwassersender 41‴ auszurichten. Das kann z.B. durch einen motorischen Schwenkmechanismus 47‴ mit oder ohne eine Richtantenne 41‴ (wie z.B. dem Horn aus Fig. 3c) oder auch durch ein Senderarray realisieret sein. Die Ausrichtung erfolgt in Abhängigkeit von der empfangenen Positionsinformation für das Unterwasserfahrzeug.

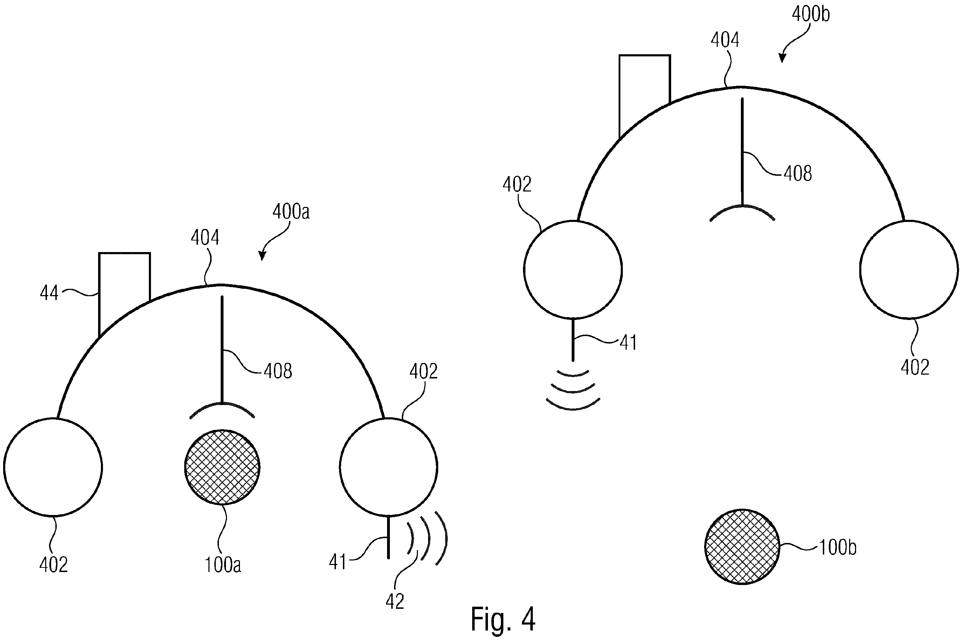

Fig. 4 zeigt zwei in einem Einsatzgebiet ausgesetzte Oberflächensender 400a und 400b, wobei idealerweise vier oder mehr dieser Oberflächensender 400a, 400b zum Einsatz kommen. In diesem Ausführungsbeispiel sind die Oberflächensender 400a und 400b als Bergevorrichtungen ausgeführt, wobei hier ein so genanntes Hullprinzip mit zwei Schwimmkörpern 402 zum Einsatz kommt, die mit einem Oberwasseraufbau 404 miteinander verbunden sind. Auf der Unterseite des Schwimmkörpers kann beispielsweise der Sender 41 angeordnet sein, während der GNSS-Empfänger 44 bevorzugt auf dem Oberwassergestell 404 angeordnet ist. Das Oberwassergestellt 404 umfasst weiterhin Aufnahmemittel 408 für ein zu bergendes bzw. freizulassendes AUVs 100a. Entsprechend einer bevorzugten Variante umfasst die Bergevorrichtung 400a und 400b Antriebsmittel bzw. Steuerungsmittel (nicht dargestellt).

Das Konzept dieser Bergevorrichtung 400a und 400b mit integriertem Oberflächensender besteht darin, dass die Oberflächenfahrzeuge 400a und 400b das Unterwasserfahrzeug 100a bzw. 100b zum Einsatzort tragen oder ziehen und diese dann beim Einsatzort aussetzen. Hierbei können die Oberflächenfahrzeuge 400a und 400b autonom agieren und z. B. vom Mutterschiff aus bzw. sogar vom Festland aus ausgesetzt werden und so mehrere Kilometer oder sogar mehrere 100 Kilometer an Distanz überwinden, ohne dass die Batterie des AUVs 100a bzw. 100b beansprucht wird. Im Zielgebiet angekommen wird dann das AUVs 100a bzw. 100b unter Zuhilfenahme der Bergemittel 408 in das Wasser abgesetzt bzw. freigelassen, so dass dieses die Mission verrichten kann. Bei vollendeter Mission fährt das AUVs 100a bzw. 100b wieder in den Freiraum zwischen den zwei Rümpfen 402 und wird dann mittels der Bergemittel 408 aufgenommen.

Da jedes der Oberwasserfahrzeuge 400a und 400b auch als Oberflächensender fungieren, könne zwei dieser Oberwasserfahrzeuge 400a und 400b ein Sendenetz für ein Navigationssystem aufspannen. Beispielsweise empfängt das AUVs 100b von seiner zugehörigen Bergevorrichtung 400b die ausgesendeten Signale (vgl. Sendemodul 41) sowie die von der Bergevorrichtung 400a ausgesendeten Signale (vgl. Sendemodul 41). Um die Messgenauigkeit zu verbessern, sind die Oberflächenfahrzeuge 400a und 400b idealerweise mit einem Abstand von mindestens einigen 100 Metern voneinander beabstandet, wobei der maximale Abstand wenige Kilometer betragen sollte, um Multipath-Signale zu minimieren und die notwendige Schallenergie zu reduzieren.

Die Oberflächenfahrzeuge 400a und 400b können unbemannt sein. In diesem Fall wäre es vorteilhaft, wenn diese mit Radarreflektoren ausgestattet sind und nachts Leuchtsignale aussenden, um die Sicherheit des Schiffverkehrs zu gewährleisten.

Entsprechend zusätzlichem Ausführungsbeispiel kann mit einem Lock-In-Verfahren die Selektivität und damit die Empfindlichkeit beim Senden und Empfangen weiter verbessert werden.

Auch wenn oben das Unterwasserfahrzeug als autonomes / unbemanntes Unterwasserfahrzeug dargestellt wurde ist das oben erläuterte Unterwassernavigationssystem für jegliche Unterwasseranwendungen bemannte Unterwassermission, ferngesteuerte Unterwasserfahrzeuge oder als Unterwassernavigationssystem für Taucher einsetzbar.

Auch wenn obige Ausführungsbeispiele in erste Linie anhand einer Vorrichtung erläutert wurden, beziehen sich weitere Ausführungsbeispiele auf ein entsprechendes Verfahren. Dieses umfasst die folgenden Schritte:
- Empfangen von zumindest einem ersten Signal, wobei das erste Signal von einem ersten Oberflächensender gerichtet ausgesendet ist, sodass eine Laufzeit des ersten Signals bestimmbar ist;
- Bestimmen der Laufzeit des ersten Signals, um so einen Rückschluss auf einen ersten Abstand zu dem ersten Oberflächensender zu erhalten; und
- Bestimmen der Position des Unterwasserfahrzeugs im dreidimensionalen Unterwasserraum in x-, y- und z-Richtung ausgehend von der bekannten Position des ersten Oberflächensenders und von dem bekannten ersten Abstand; und
- Senden eines Steuerungssignals zu dem ersten Oberflächensender, so dass der Oberflächensender in x- und y-Richtung der x- und y-Richtung des Unterwasserfahrzeugs folgt und sodass der ersten Oberflächensender das erste
Signal gerichtet in Richtung der Position des Unterwasserfahrzeugs sendet. Ein Verfahren zum Betreiben des Oberflächensenders umfasst folgende Schritte:
- Empfangen einer Positionsinformation für die Position des Unterwasserfahrzeugs; und
- Aussenden eines ersten Signals in der Art, dass das erste Signal gerichtet in Richtung der Position des Unterwasserfahrzeugs ist und dass durch das Unterwasserfahrzeug eine Laufzeit des ersten Signal bestimmbar ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Oberflächensender (40a, 40b, 40, 40', 40", 400a, 400b) für ein Unterwasserfahrzeug (10; 100a, 100b), das im dreidimensionalen Unterwasserraum in x-, y- und z-Richtung bewegbar ist, mit folgenden Merkmalen:
Steuerungsmittel (46) zum Bewegen des Oberflächensenders (40a, 40b, 40, 40', 40", 400a, 400b) in x- und y-Richtung auf der Wasseroberfläche;
einem Empfänger (20, 20', 22) zum Empfangen einer Positionsinformation für die Position des Unterwasserfahrzeugs (10; 100a, 100b);
einem Steuerungsrechner (47) zum Steuern der Steuerungsmittel (46), wobei der Steuerungsrechner (47) ausgebildet ist, den Oberflächensender (40a, 40b, 40, 40', 40", 400a, 400b) derart zu steuern, dass der Oberflächensender (40a, 40b, 40, 40', 40", 400a, 400b) in x- und y-Richtung der x- und y-Richtung des Unterwasserfahrzeugs (10; 100a, 100b) folgt,
wobei der Oberflächensender (40a, 40b, 40, 40', 40", 400a, 400b) eine Sendeeinheit umfasst, die ausgebildet ist, ein erstes Signal (42, 42a, 42b) in der Art auszusenden, dass durch das Unterwasserfahrzeug (10; 100a, 100b) eine Laufzeit des ersten Signals (42, 42a, 42b) bestimmbar ist;
wobei das Steuern derart erfolgt, dass der Oberflächensender (40a, 40b, 40, 40', 40", 400a, 400b) im Wesentlichen senkrecht oberhalb des Unterwasserfahrzeugs (10; 100a, 100b) positioniert ist, um das erste Signal (42, 42a, 42b) im Wesentlichen senkrecht in Richtung der Position des Unterwasserfahrzeugs (10; 100a, 100b) auszusenden; und
**dadurch gekennzeichnet, dass** die Sendeeinheit ein Sendearray zum selektiv richtungsabhängigen Aussenden des ersten Signals (42, 42a, 42b) umfasst und ausgebildet ist, auf Basis der Positionsinformation das Sendearray zu steuern, sodass dieses das erste Signal (42, 42a, 42b) gerichtet zu der Position des Unterwasserfahrzeugs (10; 100a, 100b) sendet; und/oder dass die Sendeeinheit einen bewegbaren Sender zum selektiv richtungsabhängigen Aussenden des ersten Signals (42, 42a, 42b) umfasst und ausgebildet ist, auf Basis der Positionsinformation den bewegbaren Sender in seiner Bewegung zu steuern, sodass dieses das erste Signal (42, 42a, 42b) gerichtet zu der Position des Unterwasserfahrzeugs (10; 100a, 100b) sendet.

2. Oberflächensender (40a, 40b, 40, 40', 40", 400a, 400b) gemäß Anspruch 1, wobei der Oberflächensender (40a, 40b, 40, 40', 40", 400a, 400b) Steuerungsmittel (46) zum Bewegen des Oberflächensenders (40a, 40b, 40, 40', 40", 400a, 400b) in x- und y-Richtung auf der Wasseroberfläche sowie einen Steuerungsrechner (47) zum Steuern der Steuerungsmittel (46) umfasst, wobei der Steuerungsrechner (47) ausgebildet ist, den Oberflächensender (40a, 40b, 40, 40', 40", 400a, 400b) derart zu steuern, dass der Oberflächensender (40a, 40b, 40, 40', 40", 400a, 400b) in x- und y-Richtung der x- und y-Richtung des Unterwasserfahrzeugs (10; 100a, 100b) folgt.

3. Oberflächensender (40a, 40b, 40, 40', 40", 400a, 400b) gemäß einem der Ansprüche 1 bis 2, wobei der Oberflächensender (40a, 40b, 40, 40', 40", 400a, 400b) eine GNSS-Antenne umfasst.

4. Oberflächensender (40a, 40b, 40, 40', 40", 400a, 400b) gemäß einem der Ansprüche 1 bis 3, wobei das erste Signal (42, 42a, 42b) eine Positionsinformation für die Position des Oberflächensenders (40a, 40b, 40, 40', 40", 400a, 400b) beinhaltet.

5. Oberflächensender (40a, 40b, 40, 40', 40", 400a, 400b) gemäß einem der Ansprüche 1 bis 4, wobei das erste Signal (42, 42a, 42b) ein Zeit-Verzögerungs-Spektrometrie-Signal (42, 42a, 42b) oder ein Ping-Signal umfasst.

6. Bergevorrichtung (400a, 400b) für ein Unterwasserfahrzeug (10; 100a, 100b) mit folgenden Merkmalen:
Aufnahmemittel (408) für das Unterwasserfahrzeug (10; 100a, 100b); und
einem Oberflächensender (40a, 40b, 40, 40', 40", 400a, 400b) gemäß einem der Ansprüche 1 bis 5.

7. System umfassend einem Oberflächensender (40a, 40b, 40, 40', 40", 400a, 400b) gemäß einem der Ansprüche 1 bis 5 sowie einen Empfänger für ein Unterwasserfahrzeug (10; 100a, 100b), mit folgenden Merkmalen:
Mitteln (20, 20', 22) zum Empfangen von zumindest einem ersten Signal (42, 42a, 42b), wobei das erste Signal von einem ersten Oberflächensender gemäß einem der Ansprüche 1 bis 5 (40a, 40b, 40 40', 40", 400a, 400b) gerichtet ausgesendet ist, sodass eine Laufzeit des ersten Signals (42, 42a, 42b) bestimmbar ist;
einer Signalanalyseeinheit (24), die ausgebildet ist, um die Laufzeit des ersten Signals (42, 42a, 42b) zu bestimmen, um so einen Rückschluss auf einen ersten Abstand zu dem ersten Oberflächensender (40a, 40b, 40, 40', 40", 400a, 400b) zu erhalten; und
einer Berechnungseinheit (26), die ausgebildet ist, ausgehend von einer bekannten Position des ersten Oberflächensenders (40a, 40b, 40, 40', 40", 400a, 400b) und von dem ersten Abstand die Position des Unterwasserfahrzeugs (10; 100a, 100b) im dreidimensionalen Unterwasserraum in x-, y- und z-Richtung zu bestimmen; und
einem Sender, der ausgebildet ist, um zu dem ersten Oberflächensender (40a, 40b, 40, 40', 40", 400a, 400b) ein Steuerungssignal zu senden, so dass der Oberflächensender (40a, 40b, 40, 40', 40", 400a, 400b) in x- und y-Richtung der x- und y-Richtung des Unterwasserfahrzeugs (10; 100a, 100b) folgt oder sodass der ersten Oberflächensender (40a, 40b, 40, 40', 40", 400a, 400b) das erste Signal (42, 42a, 42b) gerichtet in Richtung der Position des Unterwasserfahrzeugs (10; 100a, 100b) sendet.

8. System gemäß Anspruch 7, wobei das Steuerungsignal so gewählt ist, dass der erste Oberflächensender (40a, 40b, 40, 40', 40", 400a, 400b) im Wesentlichen senkrecht oberhalb des Unterwasserfahrzeugs (10; 100a, 100b) positioniert wird.

9. System gemäß Anspruch 7 oder 8, wobei die Mittel (20, 20', 22) zum Empfangen von einem zweiten Signal (42, 42a, 42b) ausgebildet sind, wobei das zweite Signal von einem zweiten Oberflächensender gemäß einem der Ansprüche 1 bis 5 (40a, 40b, 40, 40', 40", 400a, 400b) gerichtet ausgesendet ist, sodass eine Laufzeit des zweiten Signals (42, 42a, 42b) bestimmbar ist; wobei die Signalanalyseeinheit (24) ausgebildet ist, um die Laufzeit des zweiten Signals (42, 42a, 42b) zu bestimmen, um so einen Rückschluss auf einen zweiten Abstand zu dem zweiten Oberflächensender (40a, 40b, 40, 40', 40", 400a, 400b) zu erhalten, und
wobei die Berechnungseinheit (26) ausgebildet ist, ausgehend von der bekannten Position des ersten Oberflächensenders (40a, 40b, 40, 40', 40", 400a, 400b) und von dem ersten Abstand die Position des Unterwasserfahrzeugs (10; 100a, 100b) und ausgehend der bekannten Position des zweiten Oberflächensenders (40a, 40b, 40, 40', 40", 400a, 400b) und von dem zweiten Abstand die Position des Unterwasserfahrzeugs (10; 100a, 100b) die Position des Unterwasserfahrzeugs (10; 100a, 100b) im dreidimensionalen Unterwasserraum in x-, y- und z-Richtung zu bestimmen.

10. System gemäß Anspruch 7, 8 oder 9, wobei die Berechnungseinheit (26) ausgebildet ist, ausgehend von der bekannten Position des ersten Oberflächensenders (40a, 40b, 40, 40', 40", 400a, 400b) und von dem ersten Abstand die Position des Unterwasserfahrzeugs (10; 100a, 100b) und ausgehend von einer Zusatzinformation die Position des Unterwasserfahrzeugs (10; 100a, 100b) im dreidimensionalen Unterwasserraum in x-, y- und z-Richtung zu bestimmen.

11. System gemäß Anspruch 10, wobei die Zusatzinformation eine bestimmte Tiefe des Unterwasserfahrzeugs oder eine Richtungsangabe bezüglich einer Abstrahlung des ersten Signals durch den Oberflächensender (40a, 40b, 40, 40', 40", 400a, 400b) umfasst.

12. System gemäß einem der Ansprüche 7 bis 11, wobei die Signalanalyseeinheit (24) mit dem ersten Oberflächensender (40a, 40b, 40, 40', 40", 400a, 400b) synchronisiert ist.

13. Verfahren zur Steuerung eines Oberflächensender (40a, 40b, 40, 40', 40", 400a, 400b) mit Steuerungsmitteln (46), die zum Bewegen des Oberflächensenders (40a, 40b, 40, 40', 40", 400a, 400b) in x- und y-Richtung auf der Wasseroberfläche ausgebildet sind, mit folgenden Schritten:
Aussenden eines ersten Signals (42, 42a, 42b) in der Art, dass das erste Signal (42, 42a, 42b) gerichtet in Richtung der Position des Unterwasserfahrzeugs (10; 100a, 100b) ist und dass durch das Unterwasserfahrzeug (10; 100a, 100b) eine Laufzeit des ersten Signals (42, 42a, 42b) bestimmbar;
Empfangen einer Positionsinformation für die Position eines Unterwasserfahrzeugs (10; 100a, 100b) das im dreidimensionalen Unterwasserraum in x-, y- und z-Richtung bewegbar ist; und
Steuern der Steuerungsmittel (46) des Oberflächensenders (40a, 40b, 40, 40', 40", 400a, 400b)
wobei der Oberflächensender (40a, 40b, 40, 40', 40", 400a, 400b) in x- und y-Richtung der x- und y-Richtung des Unterwasserfahrzeugs (10; 100a, 100b) folgt, wobei das Steuern derart erfolgt, dass der Oberflächensender (40a, 40b, 40, 40', 40", 400a, 400b) im Wesentlichen senkrecht oberhalb des Unterwasserfahrzeugs (10; 100a, 100b) positioniert ist, um das erste Signal (42, 42a, 42b) im Wesentlichen senkrecht in Richtung der Position des Unterwasserfahrzeugs (10; 100a, 100b) auszusenden;
und **dadurch gekennzeichnet, dass** das Senden des ersten Signals (42, 42a, 42b) gerichtet in Richtung der Position des Unterwasserfahrzeugs (10; 100a, 100b) erfolgt, indem eine Sendeeinheit ein Sendearray zum selektiv richtungsabhängigen Aussenden des ersten Signals (42, 42a, 42b) umfasst und ausgebildet ist, auf Basis der Positionsinformation das Sendearray zu steuern, sodass dieses das erste Signal (42, 42a, 42b) gerichtet zu der Position des Unterwasserfahrzeugs (10; 100a, 100b) sendet; und/oder indem die Sendeeinheit einen bewegbaren Sender zum selektiv richtungsabhängigen Aussenden des ersten Signals (42, 42a, 42b) umfasst und
ausgebildet ist, auf Basis der Positionsinformation den bewegbaren Sender in seiner Bewegung zu steuern, sodass dieses das erste Signal (42, 42a, 42b) gerichtet zu der Position des Unterwasserfahrzeugs (10; 100a, 100b) sendet.

14. Computerprogramm, umfassend einen Programmcode zur Durchführung eines Verfahrens nach Anspruch 13.

## Claims

1. Surface transmitter (40a, 40b, 40, 40', 40", 400a, 400b) for an underwater vehicle (10; 100a, 100b) movable in the three-dimensional underwater space in the x-, y- and z-direction, comprising:
control means (46) for moving the surface transmitter (40a, 40b, 40, 40', 40", 400a, 400b) in the x- and y-direction on the water surface;
a receiver (20, 20', 22) for receiving position information for the position of the underwater vehicle (10; 100a, 100b);
a control computer (47) for controlling the control means (46), wherein the control computer (47) is configured to control the surface transmitter (40a, 40b, 40, 40', 40", 400a, 400b) such that the surface transmitter (40a, 40b, 40, 40', 40", 400a, 400b) follows the x- and y-direction of the underwater vehicle (10; 100a, 100b) in the x-and y-direction.
wherein the surface transmitter (40a, 40b, 40, 40', 40", 400a, 400b) comprises a transmitting unit configured to emit a first signal (42, 42a, 42b) such that a runtime of the first signal (42, 42a, 42b) can be determined by the underwater vehicle (10; 100a, 100b);
wherein controlling is carried out such that the surface transmitter (40a, 40b, 40, 40', 40", 400a, 400b) is positioned substantially perpendicularly above the underwater vehicle (10; 100a, 100b) to emit the first signal (42, 42a, 42b) substantially perpendicularly in the direction of the position of the underwater vehicle (10; 100a, 100b); and
**characterized in that** the transmitting unit comprises a transmitting array for selectively directionally emitting the first signal (42, 42a, 42b) and is configured to control the transmitting array on the basis of the position information so that the same transmits the first signal (42, 42a, 42b) directed to the position of the underwater vehicle (10; 100a, 100b), and/or that the transmitting unit comprises a movable transmitter for selectively directionally emitting the first signal (42, 42a, 42b) and is configured to control the movable transmitter in its movement on the basis of the position information so that the same transmits the first signal (42, 42a, 42b) directed to the position of the underwater vehicle (10; 100a, 100b).

2. Surface transmitter (40a, 40b, 40, 40', 40", 400a, 400b) according to claim 1, wherein the surface transmitter (40a, 40b, 40, 40', 40", 400a, 400b) comprises control means (46) for moving the surface transmitter (40a, 40b, 40, 40', 40", 400a, 400b) in the x- and y-direction on the water surface as well as a control computer (47) for controlling the control means (46), wherein the control computer (47) is configured to control the surface transmitter (40a, 40b, 40, 40', 40", 400a, 400b) such that the surface transmitter (40a, 40b, 40, 40', 40", 400a, 400b) follows the x-and y-direction of the underwater vehicle (10; 100a, 100b) in the x- and y-direction.

3. Surface transmitter (40a, 40b, 40, 40', 40", 400a, 400b) according to any of claims 1 to 2, wherein the surface transmitter (40a, 40b, 40, 40', 40", 400a, 400b) comprises a GNSS antenna.

4. Surface transmitter (40a, 40b, 40, 40', 40", 400a, 400b) according to any of claims 1 to 3, wherein the first signal (42, 42a, 42b) comprises position information for the position of the surface transmitter (40a, 40b, 40, 40', 40", 400a, 400b).

5. Surface transmitter (40a, 40b, 40, 40', 40", 400a, 400b) according to any of claims 1 to 4, wherein the first signal (42, 42a, 42b) comprises a time-delay spectrometry signal (42, 42a, 42b) or a ping signal.

6. Recovery apparatus (400a, 400b) for an underwater vehicle (10; 100a, 100b), comprising:
collecting means (408) for the underwater vehicle (10; 100a, 100b); and
a surface transmitter (40a, 40b, 40, 40', 40", 400a, 400b) according to any of claims 1 to 5.

7. System including a surface transmitter (40a, 40b, 40, 40', 40", 400a, 400b) according to any one of claims 1 to 5 and a receiver for an underwater vehicle (10; 100a, 100b), comprising:
means (20, 20', 22) for receiving at least a first signal (42, 42a, 42b), wherein the first signal is transmitted in a directional manner by a first surface transmitter according to any one of claims 1 to 5 (40a, 40b, 40, 40', 40", 400a, 400b) such that a runtime of the first signal (42, 42a, 42b) can be determined;
a signal analysis unit (24) configured to determine the runtime of the first signal (42, 42a, 42b) so as to obtain a conclusion on a first distance to the first surface transmitter (40a, 40b, 40, 40', 40", 400a, 400b); and
a calculation unit (26) configured to determine, based on a known position of the first surface transmitter (40a, 40b, 40, 40', 40", 400a, 400b) and on the first distance, the position of the underwater vehicle (10; 100a, 100b) in the three-dimensional underwater space in the x-, y- and z-direction; and
a transmitter configured to transmit a control signal to the first surface transmitter (40a, 40b, 40, 40', 40", 400a, 400b) such that the surface transmitter (40a, 40b, 40, 40', 40", 400a, 400b) follows the x- and y-direction of the underwater vehicle (10; 100a, 100b) in the x- and y-direction or such that the first surface transmitter (40a, 40b, 40, 40', 40", 400a, 400b) transmits the first signal (42, 42a, 42b) directed in the direction of the position of the underwater vehicle (10; 100a, 100b).

8. System according to claim 7, wherein the control signal is selected such that the first surface transmitter (40a, 40b, 40, 40', 40", 400a, 400b) is positioned substantially perpendicularly above the underwater vehicle (10; 100a, 100b).

9. System according to claim 7 or 8, wherein the means (20, 20', 22) are configured for receiving a second signal (42, 42a, 42b), wherein the second signal is emitted in a directional manner from a second surface transmitter according to any one of claims 1 to 5 (40a, 40b, 40, 40', 40", 400a, 400b), such that a runtime of the second signal (42, 42a, 42b) can be determined; wherein the signal analysis unit (24) is configured to determine the runtime of the second signal (42, 42a, 42b) so as to obtain a conclusion on a second distance to the second surface transmitter (40a, 40b, 40, 40', 40", 400a, 400b); and
wherein the calculation unit (26) is configured to determine, based on the known position of the first surface transmitter (40a, 40b, 40, 40', 40", 400a, 400b) and on the first distance, the position of the underwater vehicle (10; 100a, 100b), and based on the known position of the second surface transmitter (40a, 40b, 40, 40', 40", 400a, 400b) and on the second distance, the position of the underwater vehicle (10; 100a, 100b) the position of the underwater vehicle (10; 100a, 100b) in the three-dimensional underwater space in the x-, y- and z-direction.

10. System according to claim 7 or 8 or 9, wherein the calculation unit (26) is configured to determine, based on the known position of the first surface transmitter (40a, 40b, 40, 40', 40", 400a, 400b) and on the first distance, the position of the underwater vehicle (10; 100a, 100b) and, based on additional information, the position of the underwater vehicle (10; 100a, 100b) in the three-dimensional underwater space in the x-, y- and z-direction.

11. System according to claim 10, wherein the additional information comprises a certain depth of the underwater vehicle or a direction indication with respect to a radiation of the first signal by the surface transmitter (40a, 40b, 40, 40', 40", 400a, 400b).

12. Receiver according to any of claims 7 to 11, wherein the signal analysis unit (24) is synchronized with the first surface transmitter (40a, 40b, 40, 40', 40", 400a, 400b).

13. Method for controlling a surface transmitter (40a, 40b, 40, 40', 40", 400a, 400b) comprising control means (46) configured for moving the surface transmitter (40a, 40b, 40, 40', 40", 400a, 400b) in the x- and y-direction on the water surface, comprising:
emitting a first signal (42, 42a, 42b) such that the first signal (42, 42a, 42b) is directed in the direction of the position of the underwater vehicle (10; 100a, 100b) and that a runtime of the first signal (42, 42a, 42b) can be determined by the underwater vehicle (10; 100a, 100b);
receiving position information for the position of an underwater vehicle (10; 100a, 100b) movable in the three-dimensional underwater space in the x-, y- and z-direction; and
controlling the control means (46) of the surface transmitter (40a, 40b, 40, 40', 40", 400a, 400b),
wherein the surface transmitter (40a, 40b, 40, 40', 40", 400a, 400b) follows the x-and y-direction of the underwater vehicle (10; 100a, 100b) in the x-and y-direction, wherein the controlling is carried out such that the surface transmitter (40a, 40b, 40, 40', 40", 400a, 400b) is positioned substantially perpendicularly above the underwater vehicle (10; 100a, 100b) to emit the first signal (42, 42a, 42b) substantially perpendicularly in the direction of the position of the underwater vehicle (10; 100a, 100b);
and **characterized in that** transmitting the first signal (42, 42a, 42b) is carried out directed in the direction of the position of the underwater vehicle (10; 100a, 100b), by the transmitting unit including a transmitting array for selectively directionally emitting the first signal (42, 42a, 42b) and being configured to control the transmitting array on the basis of the position information so that the same transmits the first signal (42, 42a, 42b) directed to the position of the underwater vehicle (10; 100a, 100b), and/or by the transmitting unit including a movable transmitter for selectively directionally emitting the first signal (42, 42a, 42b) and being configured to control the movable transmitter in its movement on the basis of the position information so that the same transmits the first signal (42, 42a, 42b) directed to the position of the underwater vehicle (10; 100a, 100b).

14. Computer program comprising program code for performing a method according to claim 13.

## Revendications

1. Emetteur de surface (40a, 40b, 40, 40', 40", 400a, 400b) pour un véhicule sous-marin (10; 100a, 100b) qui peut se déplacer dans l'espace sous-marin tridimensionnel dans la direction x, la direction y et la direction z, aux caractéristiques suivantes:
des moyens de commande (46) destinés à déplacer l'émetteur de surface (40a, 40b, 40, 40', 40", 400a, 400b) dans la direction x et la direction y sur la surface de l'eau;
un récepteur (20, 20', 22) destiné à recevoir une information de position pour la position du véhicule sous-marin (10; 100a, 100b);
un calculateur de commande (47) destiné à commander les moyens de commande (46), où le calculateur de commande (47) est conçu pour commander l'émetteur de surface (40a, 40b, 40, 40', 40", 400a, 400b) de sorte que l'émetteur de surface (40a, 40b, 40, 40', 40", 400a, 400b) suive, dans la direction x et la direction y, la direction x et la direction y du véhicule sous-marin (10; 100a, 100b),
dans lequel l'émetteur de surface (40a, 40b, 40, 40', 40", 400a, 400b) comporte une unité d'émission qui est conçue pour émettre un premier signal (42, 42a, 42b) de sorte que par le véhicule sous-marin (10 100a, 100b) puisse être déterminée une durée du premier signal (42, 42a, 42b);
dans lequel la commande a lieu de sorte que l'émetteur de surface (40a, 40b, 40, 40', 40", 400a, 400b) soit positionné de manière sensiblement verticale au-dessus du véhicule sous-marin (10; 100a, 100b) pour émettre le premier signal (42, 42a, 42b) de manière sensiblement perpendiculaire en direction de la position du véhicule sous-marin (10; 100a, 100b); et
**caractérisé par le fait que** l'unité d'émission comporte un réseau d'antennes d'émission destiné à émettre le premier signal (42, 42a, 42b) de manière sélective en fonction de la direction et est conçue pour commander, sur base de l'information de position, le réseau d'antennes d'émission de sorte que ce dernier émette le premier signal (42, 42a, 42b) de manière dirigée vers la position du véhicule sous-marin (10; 100a, 100b); et/ou que l'unité d'émission comporte un émetteur déplaçable destiné à émettre le premier signal (42, 42a, 42b) de manière sélective en fonction de la direction et est conçue pour commander, sur base de l'information de position, l'émetteur déplaçable quant à son déplacement, de sorte que ce dernier émette le premier signal (42, 42a, 42b) de manière dirigée vers la position du véhicule sous-marin (10; 100a, 100b).

2. Emetteur de surface (40a, 40b, 40, 40', 40", 400a, 400b) selon la revendication 1, dans lequel l'émetteur de surface (40a, 40b, 40, 40', 40", 400a, 400b) comporte des moyens de commande (46) destinés à déplacer l'émetteur de surface (40a, 40b, 40, 40', 40", 400a, 400b) dans la direction x et la direction y sur la surface de l'eau ainsi qu'un ordinateur de commande (47) destiné à commander les moyens de commande (46), où l'ordinateur de commande (47) est conçu pour commander l'émetteur de surface (40a, 40b, 40, 40', 40", 400a, 400b) de sorte que l'émetteur de surface (40a, 40b, 40, 40', 40", 400a, 400b) suive, dans la direction x et la direction y, la direction x et la direction y du véhicule sous-marin (10; 100a, 100b).

3. Emetteur de surface (40a, 40b, 40, 40', 40", 400a, 400b) selon l'une des revendications 1 à 2, dans lequel l'émetteur de surface (40a, 40b, 40, 40', 40", 400a, 400b) comporte une antenne GNSS.

4. Emetteur de surface (40a, 40b, 40, 40', 40", 400a, 400b) selon l'une des revendications 1 à 3, dans lequel le premier signal (42, 42a, 42b) contient une information de position pour la position de l'émetteur de surface (40a, 40b, 40, 40', 40", 400a, 400b).

5. Emetteur de surface (40a, 40b, 40, 40', 40", 400a, 400b) selon l'une des revendications 1 à 4, dans lequel le premier signal (42, 42a, 42b) comporte un signal de spectrométrie temporisé (42, 42a, 42b) ou un signal PING.

6. Dispositif de récupération (400a, 400b) d'un véhicule sous-marin (10; 100a, 100b), aux caractéristiques suivantes:
des moyens de réception (408) pour le véhicule sous-marin (10; 100a, 100b); et
un émetteur de surface (40a, 40b, 40, 40', 40", 400a, 400b) selon l'une des revendications 1 à 5.

7. Système comportant un émetteur de surface (40a, 40b, 40, 40', 40", 400a, 400b) selon l'une des revendications 1 à 5 ainsi qu'un récepteur pour un véhicule sous-marin (10; 100a, 100b), aux caractéristiques suivantes:
des moyens (20, 20', 22) destinés à recevoir au moins un premier signal (42, 42a, 42b), où le premier signal est émis de manière dirigée par un premier émetteur de surface selon l'une des revendications 1 à 5 (40a, 40b, 40, 40', 40", 400a, 400b), de sorte que puisse être déterminée une durée du premier signal (42, 42a, 42b);
une unité d'analyse de signal (24) qui est conçue pour déterminer la durée du premier signal (42, 42a, 42b) pour obtenir ainsi une conclusion sur une première distance par rapport au premier émetteur de surface (40a, 40b, 40, 40', 40", 400a, 400b); et
une unité de calcul (26) qui est conçue pour déterminer, en partant d'une position connue du premier émetteur de surface (40a, 40b, 40, 40', 40", 400a, 400b) et de la première distance, la position du véhicule sous-marin (10; 100a, 100b) dans l'espace sous-marin tridimensionnel dans la direction la direction x, y et la direction z; et
un émetteur qui est conçu pour envoyer un signal de commande au premier émetteur de surface (40a, 40b, 40, 40', 40", 400a, 400b), de sorte que l'émetteur de surface (40a, 40b, 40, 40', 40", 400a, 400b) suive, dans la direction x et la direction y, la direction x et la direction y du véhicule sous-marin (10; 100a, 100b) ou de sorte que le premier émetteur de surface (40a, 40b, 40, 40', 40", 400a, 400b) émette le premier signal (42, 42a, 42b) de manière dirigée en direction de la position du véhicule sous-marin (10; 100a, 100b).

8. Système selon la revendication 7, dans lequel le signal de commande est sélectionné de sorte que le premier émetteur de surface (40a, 40b, 40, 40', 40", 400a, 400b) soit positionné de manière sensiblement verticale au-dessus du véhicule sous-marin (10; 100a, 100b).

9. Système selon la revendication 7 ou 8, dans lequel les moyens (20, 20', 22) sont conçus pour recevoir un deuxième signal (42, 42a, 42b), où le deuxième signal est émis de manière dirigée par un deuxième émetteur de surface selon l'une des revendications 1 à 5 (40a, 40b, 40, 40', 40", 400a, 400b), de sorte que puisse être déterminée une durée du deuxième signal (42, 42a, 42b); dans lequel l'unité d'analyse de signal (24) est conçue pour déterminer la durée du deuxième signal (42, 42a, 42b) pour obtenir ainsi une conclusion sur une deuxième distance par rapport au deuxième émetteur de surface (40a, 40b, 40, 40', 40", 400a, 400b), et
dans lequel l'unité de calcul (26) est conçue pour déterminer, en partant de la position connue du premier émetteur de surface (40a, 40b, 40, 40', 40", 400a, 400b) et de la première distance, la position du véhicule sous-marin (10; 100a, 100b) et, en partant de la position connue du deuxième émetteur de surface (40a, 40b, 40, 40', 40", 400a, 400b) et de la deuxième distance, la position du véhicule sous-marin (10; 100a, 100b) dans l'espace sous-marin tridimensionnel dans la direction x, la direction y et la direction z.

10. Système selon la revendication 7, 8 ou 9, dans lequel l'unité de calcul (26) est conçue pour déterminer, en partant de la position connue du premier émetteur de surface (40a, 40b, 40, 40', 40", 400a, 400b) et de la première distance, la position du véhicule sous-marin (10; 100a, 100b) et, en partant d'une information additionnelle, la position du véhicule sous-marin (10; 100a, 100b) dans l'espace sous-marin tridimensionnel dans la direction x, la direction y et la direction z.

11. Système selon la revendication 10, dans lequel l'information additionnelle comporte une profondeur déterminée du véhicule sous-marin ou une indication de direction par rapport à une émission du premier signal par l'émetteur de surface (40a, 40b, 40, 40', 40", 400a, 400b).

12. Système selon l'une des revendications 7 à 11, dans lequel l'unité d'analyse de signal (24) est synchronisée avec le premier émetteur de surface (40a, 40b, 40, 40', 40", 400a, 400b).

13. Procédé de commande d'un émetteur de surface (40a, 40b, 40, 40', 40", 400a, 400b) par des moyens de commande (46) qui sont conçus pour déplacer l'émetteur de surface (40a, 40b, 40, 40', 40", 400a, 400b) dans la direction x et la direction y sur la surface de l'eau, aux étapes suivantes consistant à:
émettre un premier signal (42, 42a, 42b) de sorte que le premier signal (42, 42a, 42b) soit dirigé en direction de la position du véhicule sous-marin (10; 100a, 100b) et que par le véhicule sous-marin (10 100a, 100b) puisse être déterminée une durée du premier signal (42, 42a, 42b);
recevoir une information de position pour la position d'un véhicule sous-marin (10; 100a, 100b) qui peut se déplacer dans l'espace sous-marin tridimensionnel dans la direction x, la direction y et la direction z; et
commander les moyens de commande (46) de l'émetteur de surface (40a, 40b, 40, 40', 40", 400a, 400b), où l'émetteur de surface (40a, 40b, 40, 40', 40", 400a, 400b) suit, dans la direction x et la direction y, la direction x et la direction y du véhicule sous-marin (10; 100a, 100b), où la commande a lieu de sorte que l'émetteur de surface (40a, 40b, 40, 40', 40", 400a, 400b) soit positionné de manière sensiblement verticale au-dessus du véhicule sous-marin (10; 100a, 100b) pour émettre le premier signal (42, 42a, 42b) de manière sensiblement perpendiculaire en direction de la position du véhicule sous-marin (10; 100a, 100b);
et **caractérisé par le fait que** l'émission du premier signal (42, 42a, 42b) a lieu de manière dirigée en direction de la position du véhicule sous-marin (10; 100a, 100b), en ce qu'une unité d'émission comporte un réseau d'antennes d'émission destiné à émettre le premier signal (42, 42a, 42b) de manière sélective en fonction de la direction et est conçue pour commander, sur base de l'information de position, le réseau d'antennes d'émission de sorte que ce dernier émette le premier signal (42, 42a, 42b) de manière dirigée vers la position du véhicule sous-marin (10; 100a, 100b); et/ou en ce que l'unité d'émission comporte un émetteur déplaçable destiné à émettre le premier signal (42, 42a, 42b) de manière sélective en fonction de la direction et est conçue pour commander, sur base de l'information de position, l'émetteur déplaçable quant à son déplacement, de sorte que ce dernier émette le premier signal (42, 42a, 42b) de manière dirigée vers la position du véhicule sous-marin (10; 100a, 100b).

14. Programme d'ordinateur, comportant un code de programme pour mettre en oeuvre un procédé selon la revendication 13.
